# EUROPÄISCHE PATENTSCHRIFT

(11) **EP 1 541 425 B1**
(45) Veröffentlichungstag und Bekanntmachung des Hinweises auf die Patenterteilung: **26.09.2007**
(21) Anmeldenummer: 04027690.9
(22) Anmeldetag: 22.11.2004
(51) Int. Cl.: B60R 21/13

(54) **Haltevorrichtung für eine Fahrzeugsicherheitsvorrichtung**
Securing device for a vehicle safety device
Dispositif de maintien pour un dispositif de sécurité d'un véhicule

(30) Priorität: 12.12.2003 DE 10358774
(43) Veröffentlichungstag der Anmeldung: 15.06.2005
(73) Patentinhaber: Brose Schliesssysteme GmbH & Co. KG, 42369 Wuppertal (DE)
(72) Erfinder: Kachouh, Checrallah, 44227 Dortmund (DE)
(74) Vertreter: Gesthuysen, von Rohr & Eggert

(56) Entgegenhaltungen:
- EP-A- 0 916 552
- DE-A1- 10 038 431
- DE-A1- 19 821 594

## Beschreibung

Die Erfindung betrifft eine Haltevorrichtung für eine Fahrzeugsicherheitseinrichtung mit den Merkmalen des Oberbegriffs von Anspruch 1.

Aus der Praxis sind Fahrzeugsicherheitseinrichtungen in verschiedener Weise bekannt. Eine solche Fahrzeugsicherheitseinrichtung dient dazu, bei einem Unfall eine Verletzung von Fahrzeuginsassen zu verhindern oder jedenfalls das Gefährdungspotential eines Unfalls zu begrenzen. Fahrzeugsicherheitseinrichtungen der in Rede stehenden Art sind insbesondere Überrollbügel, bewegliche Kopfstützen, Kniepolster, verlagerbare Motorhauben o. dgl.. Eine solche Fahrzeugsicherheitseinrichtung wird bei einem Unfall mechanisch in eine schützende Position verlagert. Dazu wird ein entsprechendes Bauteil der Fahrzeugsicherheitseinrichtung aus einer Ruhestellung schlagartig in eine Wirkungsstellung verlagert. Die dafür erforderliche Energie wird regelmäßig durch Federelemente, mechanische oder pneumatische Federelemente, zur Verfügung gestellt.

Im Normalbetrieb eines Kraftfahrzeugs ist das zu verlagernde Bauteil der Fahrzeugsicherheitseinrichtung in seiner Ruhestellung fixiert, nämlich durch eine Haltevorrichtung der in Rede stehenden Art gehalten. Die dabei aufzubringenden Haltekräfte sind vergleichsweise hoch. Für die Funktion der Fahrzeugsicherheitseinrichtung ist entscheidend, daß bei einem Unfall binnen einer kürzestmöglichen Reaktionszeit eine sichere Auslösung der Fahrzeugsicherheitseinrichtung erfolgt. Ob jemals während der Nutzungsdauer eines Kraftfahrzeugs ein solcher Fall auftritt, ist allerdings ungewiß. Es ist also notwendig, daß eine solche Fahrzeugsicherheitseinrichtung auch nach einer mehrjährigen "Standzeit" sicher auslöst. Selbstverständlich darf eine Auslösung der Fahrzeugsicherheitseinrichtung im normalen Alltagsbetrieb des Kraftfahrzeugs nicht erfolgen, und zwar auch nicht bei Auftreten betriebstypischer Längs- und Querbeschleunigungen.

Die voranstehenden Erläuterungen machen deutlich, daß an eine Haltevorrichtung für eine solche Fahrzeugsicherheitseinrichtung einander widersprechende Forderungen gestellt werden. Dementsprechend sind verschiedene Ansätze für Konstruktionen solcher Haltevorrichtungen bekannt.

Eine bekannte Haltevorrichtung für eine Fahrzeugsicherheitseinrichtung (DE 100 38 431 A1) zeigt eine das Bauteil der Fahrzeugsicherheitseinrichtung in der Ruhestellung festhaltende Falle, wobei die Falle von einer Sperrklinkenanordnung in dieser Eingriffsstellung gehalten wird. Dabei befindet sich die Sperrklinkenanordnung in einer labilen Gleichgewichtslage. Für die Auslösung der Fahrzeugsicherheitseinrichtung ist die Sperrklinkenanordnung lediglich aus der Gleichgewichtslage zu verstellen. Nachteilig ist hier die Tatsache, daß eine zusätzliche Blockieranordnung vorgesehen werden muß, um Fehlauslösungen durch die betriebstypischen Längs- und Querbeschleunigungen zu vermeiden.

Die bekannte Haltevorrichtung für eine Fahrzeugsicherheitseinrichtung, von der die Erfindung ausgeht (DE 198 21 594 A1) und die sich in den Formulierungen des Oberbegriffs des Anspruchs 1 widerspiegelt, zeigt eine Sperrklinkenanordnung für eine Falle mit zwei wirkungsmäßig hintereinander angeordneten Sperrklinken. Die zweite Sperrklinke stellt ein Blockierelement dar, das von einem motorischen Antrieb, hier von einem Elektromagneten, bewegt werden kann.

Bei dem zuvor erläuterten Stand der Technik sind die Falle einerseits und die beiden Sperrklinken andererseits jeweils im rechten Winkel zueinander angeordnet. Durch die Anordnung wird erreicht, daß eine beispielsweise durch Erschütterungen ausgelöste Kraft sich nur auf eine der drei Teile im Sinne einer Öffnung auswirken kann.

Es liegt auf der Hand, daß die hohen Haltekräfte, die die Haltevorrichtung bei Ruhestellung des Bauteils aufnehmen muß, bei einer Unfallsituation nicht dazu führen dürfen, daß eine zu lange Reaktionszeit eintritt. Deshalb ist bei der bekannten Haltevorrichtung die Sperrklinkenanordnung mit Sperrklinkenkinematik als Untersetzungsgetriebe, nämlich als Hebelgetriebe ausgeführt. Der Elektromagnet greift am langen Hebelarm der zweiten Sperrklinke an.

Der Lehre der vorliegenden Erfindung liegt das Problem zugrunde, die bekannte, eingangs erläuterte Haltevorrichtung für eine Fahrzeugsicherheitseinrichtung unter Berücksichtigung der besonderen Verhältnisse bei einer solchen Fahrzeugsicherheitseinrichtung, insbesondere der auftretenden Kräfte und Kraftwirkungsrichtungen im Normalbetrieb wie bei einem Unfall, so auszugestalten und weiterzubilden, daß bei hoher Betriebssicherheit die für die Freigabe der Falle aufzubringende Kraft bzw. Arbeit auf ein Minimum reduziert wird.

Das vorliegende Problem wird bei einer Haltevorrichtung mit den Merkmalen des Oberbegriffs von Anspruch 1 durch die Merkmale des kennzeichnenden Teils von Anspruch 1 gelöst.

Wesentlich ist, daß die Falle selbst ein aktiver Bestandteil der Haltevorrichtung ist, nämlich durch eine Verstellung der Falle aus der Eingriffsstellung heraus in Richtung der Freigabestellung die Sperrklinkenkinematik der Sperrklinkenanordnung aktiv verstellt wird. Die Blockierung der Falle durch das Blockierelement erfolgt gewissermaßen indirekt, nämlich nur dadurch, daß das Blockierelement die durch die Falle - an sich - bewirkbare Verstellung der Sperrklinkenkinematik blockiert.

Der Begriff der "Sperrklinkenkinematik" ist umfassend als ein Mechanismus zu verstehen, der zwischen die Falle und das Blockierelement geschaltet ist. Beim Ausgangspunkt für die Lehre ist das selbst wieder nur ein sperrklinkenartiges Bauteil. Das ist aber nicht zwingend. Bei einer entsprechenden Auslegung der Sperrklinkenkinematik läßt sich die zur Freigabe der Falle und damit zur Auslösung der Fahrzeugsicherheitseinrichtung notwendige Kraft reduzieren. Dies ist insbesondere deshalb interessant, weil so die notwendigerweise hohe Rückhaltekraft gegen die Wirkung der Federelemente am verlagerbaren Bauteil nur stark reduziert am Blockierelement auftritt und dementsprechend insoweit nur geringe Reibungskräfte auftreten. Das sichert eine kurze Reaktionszeit für die Fahrzeugsicherheitseinrichtung.

Es gibt nun eine Mehrzahl von Möglichkeiten, die Lehre der Erfindung auszugestalten und weiterzubilden. Dazu darf insgesamt auf die Unteransprüche verwiesen werden. Zu einzelnen Unteransprüchen darf noch eine gesonderte Erläuterung angefügt werden.

Üblicherweise wird eine Fahrzeugsicherheitseinrichtung der in Rede stehenden Art mit einem motorischen Öffnungsantrieb, beispielsweise also einem Elektromotor, Elektromagneten oder Pneumatikantrieb, ausgerüstet sein. Das ist ja auch beim den Ausgangspunkt bildenden Stand der Technik der Fall. Vorteilhaft ist hier, daß ein solcher Öffnungsantrieb nur eine geringe Leistung aufweisen muß. Außerdem ergeben sich die gewünschten kurzen Öffnungszeiten.

Die besonders bevorzugte Ausgestaltung gemäß Anspruch 4 führt dazu, daß die Falle mit dem Zwischenhebel und dem Übertragungshebel ein Viergelenk bilden, mit dem weitgehend beliebige Untersetzungsverhältnisse mit geringem konstruktiven Aufwand einstellbar sind. Mit dieser einfachen Einstellbarkeit der Untersetzung läßt sich die Sperrklinkenanordnung optimal dem jeweiligen Anwendungsfall anpassen.

Durch die schwenkbare Anlenkung des Zwischenhebels an die Falle entfällt die Notwendigkeit eines direkten blockierenden Eingriffs zwischen der Sperrklinkenanordnung und der Falle. Gerade bei den hohen Rückhaltekräften einer Fahrzeugsicherheitseinrichtung ist diese Konstruktion von erheblichem Vorteil.

Es darf darauf hingewiesen werden, daß in allen Ausführungsbeispielen durch die erfindungsgemäße Lösung eine Gewichtsreduzierung möglich ist, sei es, daß leichtere Kunststoffwerkstoffe verwendbar sind, sei es, daß bestimmte Komponenten weniger "massiv" auszulegen sind oder sei es, daß kleinere Antriebe verwendbar sind.

Im folgenden wird die Erfindung anhand einer lediglich Ausführungsbeispiele darstellenden Zeichnung näher erläutert. In der Zeichnung zeigt
- Fig. 1: in schematischer Darstellung eine Fahrzeugsicherheitseinrichtung in Form einer ausfahrbaren Kopfstütze mit integriertem Überrollbügel und daran angedeuteter Haltevorrichtung,
- Fig. 2: eine Haltevorrichtung mit einer Falle und einer Sperrklinkenanordnung in Eingriffsstellung,
- Fig. 3: die Haltevorrichtung gemäß Fig. 2 in Freigabestellung,
- Fig. 4: die Haltevorrichtung gemäß Fig. 2 in Überhubstellung (gestrichelte Darstellung) und
- Fig. 5: eine weitere Haltevorrichtung mit Falle und Sperrklinkenanordnung in schematischer Darstellung.

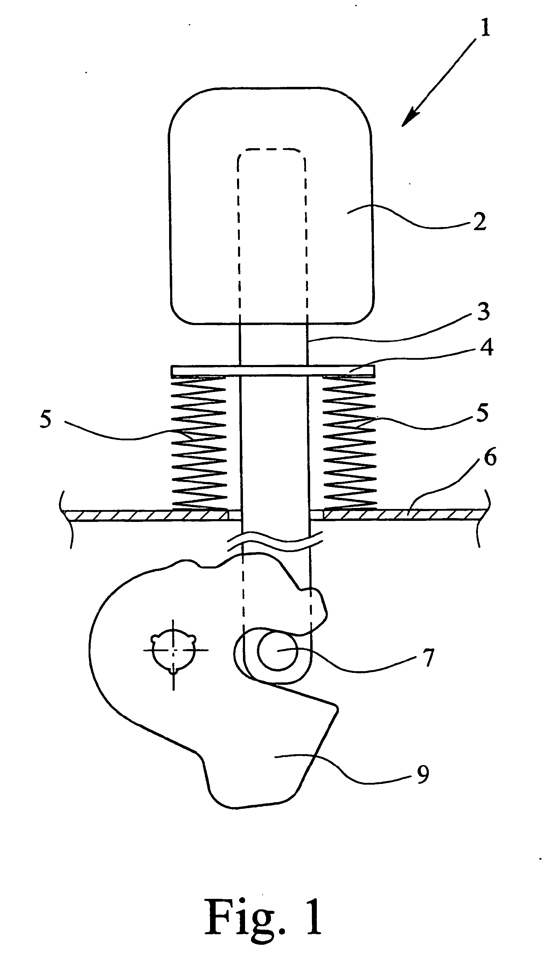

Fig. 1 zeigt als Beispiel einer Fahrzeugsicherheitseinrichtung 1 eine Kopfstütze 2 mit integriertem, gestrichelt angedeutetem Überrollbügel. Dieser bildet gleichzeitig ein aus einer Ruhestellung, gezeigt in Fig. 1, schlagartig in eine Wirkungsstellung zu verlagerndes Bauteil.

Das Bauteil 2 der Fahrzeugsicherheitseinrichtung 1 weist einen Träger 3 auf. An diesem Träger 3 befindet sich im dargestellten Ausführungsbeispiel ein Flansch 4, an dem von unten her Federpakete 5 zum schlagartigen Verlagern des Bauteils 2 in seine Wirkungsstellung, hier in seine ausgefahrene Stellung, angreifen. Diese Federpakete 5 sind in der Ruhestellung des Bauteils 2 eingespannt zwischen dem Flansch 4 und einem karosseriefesten Widerlager 6, das hier nur angedeutet ist. Das Bauteil 2 hält seine Ruhestellung ein, weil es in dieser Ruhestellung durch die Haltevorrichtung festgehalten wird. Dazu weist das Bauteil 2 ein Halteelement 7 auf, das in einem karosseriefesten Einlaufkanal 8 in Ruhestellung des Bauteils 2 liegt und dort von einer Falle 9 der Haltevorrichtung festgehalten wird.

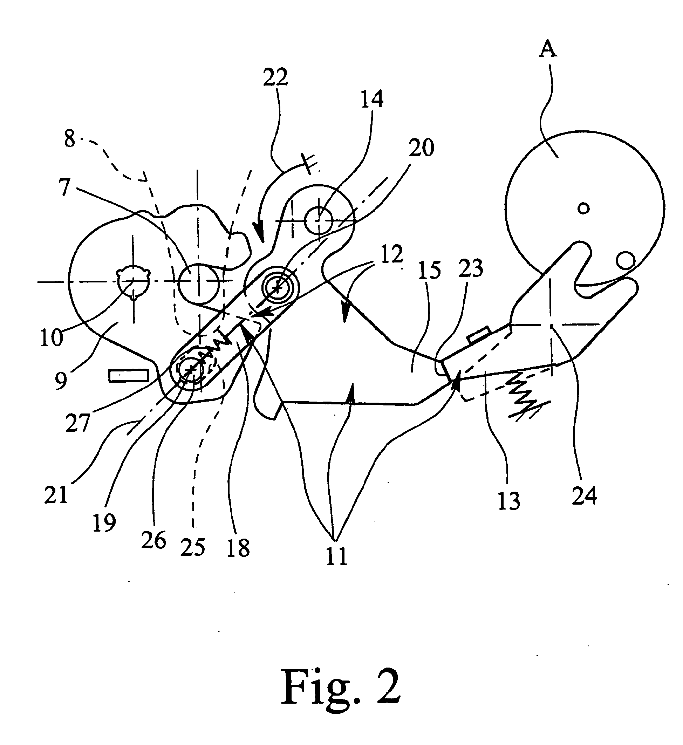

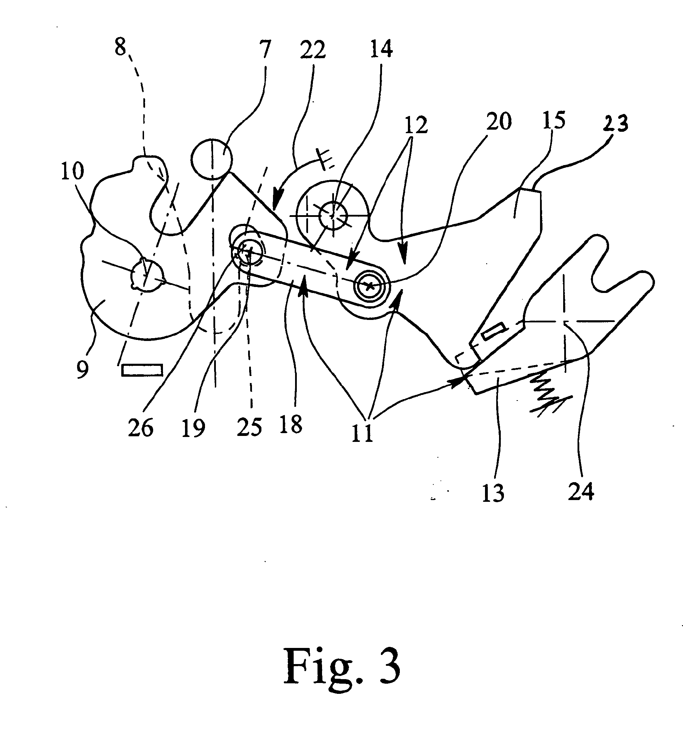

In Fig. 1 ist die Haltevorrichtung für das Bauteil 2 der Fahrzeugsicherheitseinrichtung 1 nur angedeutet. Fig. 2 zeigt ein bevorzugtes Ausführungsbeispiel einer solchen Haltevorrichtung. Die Haltevorrichtung weist zunächst die das Bauteil 2 in der Ruhestellung festhaltende und dazu an dem Halteelement 7 des Bauteils 2 angreifende Falle 9 auf. Die Falle 9 ist um eine Schwenkachse 10 schwenkbar. Auch diese Schwenkachse 10 ist karosseriefest. Durch diese Verschwenkung ist die Falle 9 einerseits in eine das Bauteil 2 haltende Eingriffsstellung, gezeigt in Fig. 2, andererseits in eine das Halteelement 7 und damit das Bauteil 2 freigebende Freigabestellung, gezeigt in Fig. 3 der Zeichnung, bringbar.

Ferner vorgesehen ist eine die Falle 9 in der Eingriffsstellung haltende Sperrklinkenanordnung 11. Die Sperrklinkenanordnung 11 ihrerseits ist in eine die Falle 9 in der Eingriffsstellung haltende Haltestellung und andererseits in eine die Falle 9 freigebende Lösestellung bringbar. Dazu weist die Sperrklinkenanordnung 11 eine Sperrklinkenkinematik 12 und ein verstellbares Blockierelement 13 auf. Bei in Haltestellung befindlicher Sperrklinkenanordnung 11 verhindert das Blockierelement 13 eine Verstellung der Falle 9 aus der Eingriffsstellung (Fig. 2) in die Freigabestellung (Fig. 3). Die in Fig. 2 dargestellte Stellung ist also die Ruhestellung des Bauteils 2 und die Stellung, die gegebenenfalls während der gesamten Nutzungsdauer eines Kraftfahrzeugs von der Haltevorrichtung und der Fahrzeugsicherheitseinrichtung 1 beibehalten wird. Ungeachtet dessen muß bei einem Unfall eine sichere Auslösung des Bauteils 2 in kürzester Zeit erfolgen.

Für die Lehre ist nun die Ausgestaltung der Haltevorrichtung im einzelnen von Interesse. Vorgesehen ist zunächst, daß durch die Verstellung der Falle 9 aus der Eingriffsstellung heraus in Richtung der Freigabestellung die Sperrklinkenkinematik 12 aktiv verstellt wird. Die Blockierwirkung des Blockierelementes 13 realisiert sich also dadurch, daß die durch die Falle 9 bewirkbare Verstellung der Sperrklinkenkinematik 12 blockiert wird.

In der dargestellten Konstruktion ist, wie auch im Stand der Technik bereits verwirklicht, die Sperrklinkenkinematik 12 als Untersetzungsgetriebe ausgestaltet, so daß die vom Blockierelement 13 zur Blockierung der Falle 9 aufzubringende Blockierkraft entsprechend der Auslegung des Untersetzungsgetriebes reduziert ist. Mit dem Begriff "Untersetzungsgetriebe" ist vorliegend gemeint, daß der Betrag der von der Falle 9 auf die Sperrklinkenkinematik 12 wirkende Rückstellkraft größer ist als die resultierende von der Sperrklinkenkinematik 12 auf das Blockierelement 13 wirkende Kraft.

Es wurde im allgemeinen Teil der Beschreibung erläutert, daß die Ausgestaltung der Haltevorrichtung mit einem motorischen Öffnungsantrieb in Verbindung mit der beschriebenen Sperrklinkenanordnung 11 besonders vorteilhaft ist. Dabei ist die Freigabe der Falle 9 dadurch auslösbar, daß ein in Fig. 2 angedeuteter Öffnungsantrieb A eine Verstellung des Blockierelements 6 von der blockierenden Stellung in die in Fig. 2 gestrichelt dargestellte, nicht blockierende Stellung bewirkt. Der in Fig. 2 angedeutete Öffnungsantrieb A ist als elektromotorischer Schneckenradantrieb ausgestaltet. Entsprechende Konstruktionen sind aus dem Stand der Technik umfangreich bekannt, beispielsweise aus der DE 100 38 431 Al. Die DE 198 21 594 A1 zeigt hingegen einen Elektromagneten als Öffnungsantrieb.

Im dargestellten und insoweit bevorzugten Ausführungsbeispiel weist die Sperrklinkenkinematik 12 einen um eine Schwenkachse 14 schwenkbaren Übertragungshebel 15 auf. Durch die Rückstellung der Falle 9 aus der Eingriffsstellung heraus in Richtung der Freigabestellung, in Fig. 2 linksherum, ist der Übertragungshebel 15, in Fig. 2, linksherum verstellbar. Bei in Haltestellung befindlicher Sperrklinkenanordnung 11 blockiert das Blockierelement 13 den Übertragungshebel 15, so daß im Ergebnis auch die Rückstellung der Falle 9 blockiert wird.

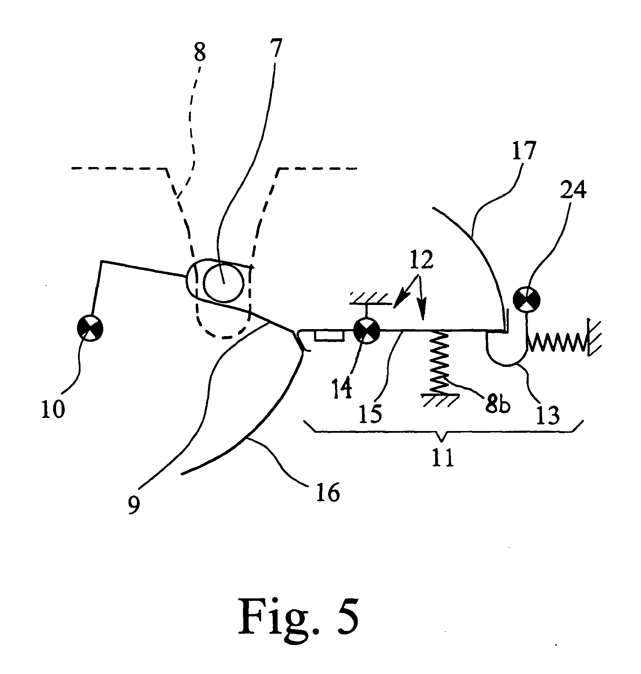

Eine besonders einfache, mit wenigen Bauteilen realisierbare Ausgestaltung des oben genannten Prinzips zeigt Fig. 5 in schematischer Darstellung. Der Übertragungshebel 15 ist hier einerseits mit dem Blockierelement 13 und andererseits mit der Falle 9 in Eingriff bringbar. Fig. 5 zeigt die Falle 9 in Eingriffsstellung und die Sperrklinkenanordnung 3 in Haltestellung.

Wird nun das Blockierelement 13 in Fig. 5 nach rechts verschwenkt, so wird die Falle 9 freigegeben. Die Rückstellung der Falle 9 aus der in Fig. 5 dargestellten Eingriffsstellung in Fig. 5 linksherum bewirkt dann ein Verschwenken des Übertragungshebels 15 in Fig. 5 rechtsherum gegen der Vorspannung einer Feder 8b. Durch eine an der Falle 9 angeordnete Führungsfläche 16 wird der Übertragungshebel 15 in der ausgelenkten Stellung gehalten. Durch eine weitere Führungsfläche 17 wird das Blockierelement 13 ebenfalls in der ausgelenkten Stellung gehalten. Bei der anschließenden Verstellung der Falle 9 aus der Freigabestellung heraus in die Eingriffsstellung kommt das Blockierelement 13 wieder in blockierenden Eingriff mit dem Übertragungshebel 15 und hält damit die Falle 9 in der dargestellten Eingriffsstellung. Besonders vorteilhaft ist hier die Tatsache, daß der Übertragungshebel 15, der Teil der Sperrklinkenkinematik 12 ist, als Untersetzungsgetriebe ausgebildet ist, da die Schwenkachse 14 des Übertragungshebels 15 nicht mittig, sondern versetzt am Übertragungshebel 15 angeordnet ist.

Es darf darauf hingewiesen werden, daß die Blockierung des Übertragungshebels 15 durch das Blockierelement 13 vorzugsweise in nur einer Schwenkrichtung des Übertragungshebels 15 vorgesehen ist. In bestimmten Anwendungsfällen kann es aber auch vorteilhaft sein, daß die Blockierung durch das Blockierelement 13 ein Verschwenken des Übertragungshebels 15 in beiden Schwenkrichtungen verhindert.

Bei dem in den Fig. 2 bis 4 dargestellten und insoweit bevorzugten Ausführungsbeispiel ist vorgesehen, daß der Übertragungshebel 15 mit der Falle 9 bewegungsgekoppelt ist. Hiermit ist eine Zwangskopplung zwischen dem Übertragungshebel 15 und der Falle 9 gemeint, die dazu führt, daß eine Verstellung der Falle 9 grundsätzlich zu einer entsprechenden Verstellung des Übertragungshebels 15 führt.

In bevorzugter Ausgestaltung ist zur oben genannten Bewegungskopplung ein Zwischenhebel 18 zwischen dem Übertragungshebel 15 und der Falle 9 angeordnet, der an der Falle 9 einerseits und am Übertragungshebel 15 andererseits schwenkbar angelenkt ist. Der Anlenkpunkt 19 an der Falle 9 ist bezüglich der Schwenkachse 10 der Falle 9 exzentrisch, also von der Schwenkachse 10 beabstandet, angeordnet. Entsprechend ist der Anlenkpunkt 20 am Übertragungshebel 15 bezüglich der Schwenkachse 14 des Übertragungshebels 15 exzentrisch angeordnet.

Durch die oben beschriebene Kopplung zwischen Falle 9, Zwischenhebel 18 und Übertragungshebel 15 ergibt sich ein Viergelenkgetriebe, durch das sich die jeweils gewünschte Untersetzung der Sperrklinkenkinematik 12 mit geringem konstruktiven Aufwand einstellen läßt. Besonders vorteilhaft ist die Tatsache, daß sich die Untersetzung eines derartigen Viergelenkgetriebes je nach Stellung beispielsweise des Übertragungshebels 15 ändert.

Besonders vorteilhaft für die Betriebssicherheit der Haltevorrichtung ist es, wenn bei in Eingriffsstellung befindlicher Falle 9 die von der Falle 9 über den Zwischenhebel 18 auf den Übertragungshebel 15 wirkende Kraft ein Drehmoment am Übertragungshebel 15 bezüglich dessen Schwenkachse 14 bewirkt, und wenn die Blockierkraft des Blockierelements 13 diesem Drehmoment entgegenwirkt.

In der Darstellung in Fig. 2 erkennt man, daß bei einer Kraftwirkung vom Halteelement 7 des Bauteils 2 in Fig. 2 nach oben (verursacht durch die Federpakete 5) eine entsprechende Kraft von der Falle 9 über den Zwischenhebel 18 auf den Übertragungshebel 15 geleitet wird. Die Kraftwirkungslinie 21 dieser Kraft läuft durch die beiden Anlenkpunkte 19, 20. Dadurch, daß die Kraftwirkungslinie 21 in Fig. 2 rechts an der Schwenkachse 14 des Übertragungshebels 15 vorbeiläuft, wird ein Drehmoment am Übertragungshebel 15 in Fig. 2 linksherum erzeugt. Diesem Drehmoment wirkt die Blockierkraft des Blockierelements 13 entgegen. Die Untersetzung wird desto größer, je näher die Kraftwirkungslinie 21 an der Schenkachse 14 verläuft. Durch eine geeignete Beabstandung kann man die obigen Ziele im Sinne eines optimalen Kompromisses kombinieren.

Zwar ist durch die Federpakete 5 am Bauteil 2 ohnehin gewährleistet, daß die Falle 9 normalerweise sicher die Freigabestellung erreicht. Ungeachtet dessen ist im dargestellten Ausführungsbeispiel für den Übertragungshebel 15 eine Vorspannung eingerichtet, der die Blockierkraft des Blockierelementes 13 entgegenwirkt. Diese Vorspannung kann auch an anderen Komponenten der Sperrklinkenkinematik 12 vorgesehen sein. Die Richtung der Vorspannung am Übertragungshebel 15 zeigt der Pfeil 22.

Um die oben genannte Blockierkraft vom Blockierelement 13 auf den Übertragungshebel 15 übertragen zu können, weist der Übertragungshebel 15 eine Rast 23 auf.

Das Blockierelement 13 ist in bevorzugter Ausgestaltung nach Art einer Sperrklinke um eine Schwenkachse 24 schwenkbar. Es ist ferner ein Anschlag vorgesehen, an dem das Blockierelement 13 in der blockierenden Stellung anliegt und gegen den die Vorspannung einer am Blockierelement 13 angreifenden Feder wirkt. Bei in Haltestellung befindlicher Sperrklinkenanordnung 11 steht das Blockierelement 13, wie oben beschrieben, in blockierendem Eingriff mit dem Übertragungshebel 15. Eine derartige Ausgestaltung des Blockierelements 13 nach Art einer Sperrklinke führt zu einer konstruktiv besonders einfachen Realisierung.

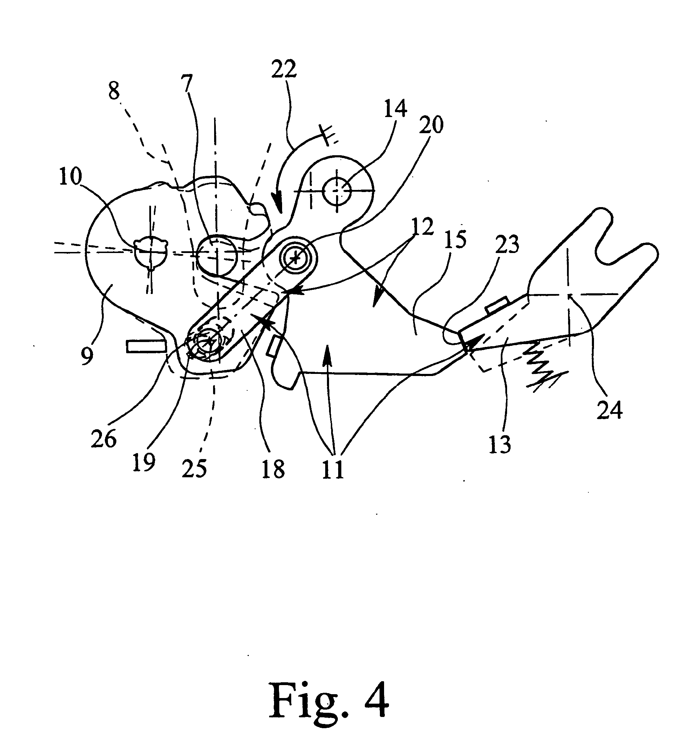

In besonders bevorzugter Ausgestaltung weist die Anlenkung des Zwischenhebels 18 an der Falle 9 einen Freilauf auf. Dadurch ist es möglich, daß eine Verstellung der Falle 9 aus der Eingriffsstellung in eine von der Freigabestellung aus gesehen jenseits der Eingriffsstellung liegende Überhubstellung möglich ist, ohne notwendigerweise eine Verstellung des Übertragungshebels 15 nach sich zu ziehen. Die Überhubstellung der Falle 9 ist in Fig. 4 gestrichelt dargestellt. Die Überhubstellung der Falle 9 wird kurzzeitig dann eingenommen, wenn das Bauteil 2 nach vorheriger Auslösung beispielsweise bei einem Unfall anschließend wieder in seine Ruhestellung zurückgeführt wird. Der Übertragungshebel 15 wird währenddessen gegen den Anschlag in seine Überhubstellung gedrückt, so daß das Blockierelement 13 in die blockierende Stellung einfallen kann.

Der oben genannte Freilauf ist dadurch realisiert, daß die Falle 9 ein Langloch 25 und der Zwischenhebel 18 einen im Langloch 25 angeordneten Zapfen 26 auf weist. Bei der Verstellung der Falle 9 von der Hauptschließstellung in die Überhubstellung läuft der Zapfen 26 im Langloch 25, wie in Fig. 4 dargestellt.

Um eine hinreichende Kopplung zwischen Falle 9 und Sperrklinkenkinematik 12 insbesondere für die Rückstellung der Falle 9 aus der Eingriffsstellung in die Freigabestellung sowie die oben bereits beschriebene Fixierung des Übertragungshebels 15 am Anschlag beim Überhub der Falle 9 zu gewährleisten, und um ferner ein unkontrolliertes Laufen des Zapfens 26 im Langloch 25 zu vermeiden, ist der Zwischenhebel 18 gegen die Falle 9 derart vorgespannt, daß die Falle 9 nur gegen die Vorspannung in die Überhubstellung bringbar ist. Diese Vorspannung läßt sich durch eine Vorspannfeder 27 realisieren, wie in Fig. 2 dargestellt.

Grundsätzlich ist es möglich, die Falle 9 mittels einer weiteren Feder in Richtung ihrer Freigabestellung vorzuspannen. Dann behält die Falle 9 diese Freigabestellung solange bei bis das Halteelement 7 wieder in die Ruhestellung geführt worden ist und die Falle 9 damit wieder die Eingriffsstellung erreicht hat, in der sie von der Sperrklinkenanordnung 11 fixiert wird. Für das vorliegende Ausftihrungsbeispiel mit den besonderen Bedingungen einer Fahrzeugsicherheitseinrichtung 1 kann es aber zweckmäßiger sein, daß die Falle 9 in Richtung der Eingriffsstellung federvorgespannt ist.

## Patentansprüche

1. Haltevorrichtung für eine Fahrzeugsicherheitseinrichtung mit einem aus einer Ruhestellung schlagartig in eine Wirkungsstellung zu verlagernden Bauteil (2) mit einem Halteelement (7),
mit einer das Bauteil (2) in der Ruhestellung festhaltenden und dazu am Halteelement (7) des Bauteils (2) angreifenden Falle (9),
wobei die Falle (9) um eine Schwenkachse (10) schwenkbar und dadurch einerseits in eine das Bauteil (2) haltende Eingriffsstellung und andererseits in eine das Halteelement (7) und damit das Bauteil (2) freigebende Freigabestellung bringbar ist,
mit einer die Falle (9) in der Eingriffsstellung haltenden Sperrklinkenanordnung (11),
wobei die Sperrklinkenanordnung (11) ihrerseits in eine die Falle (9) in der Eingriffsstellung haltende Haltestellung und in eine die Falle (9) freigebende Lösestellung bringbar ist,
wobei die Sperrklinkenanordnung (11) eine Sperrklinkenkinematik (12) und ein verstellbares Blockierelement (13) aufweist und
wobei bei in Haltestellung befindlicher Sperrklinkenanordnung (11) das Blokkierelement (13) eine Verstellung der Falle (9) aus der Eingriffsstellung in die Freigabestellung verhindert,
**dadurch gekennzeichnet,**
**daß** durch die Verstellung der Falle (9) aus der Eingriffstellung heraus in Richtung der Freigabestellung die Sperrklinkenkinematik (12) verstellt wird und
**daß** das Blockierelement (13) die durch die Falle (9) bewirkbare Verstellung der Sperrklinkenkinematik (12) blockiert.

2. Haltevorrichtung nach Anspruch 1, **dadurch gekennzeichnet, daß** die Sperrklinkenkinematik (12) ein Untersetzungsgetriebe ist und daß dadurch die vom Blockierelement (13) zur Blockierung der Falle (9) aufzubringende Blokkierkraft entsprechend der Auslegung des Untersetzungsgetriebes reduziert ist.

3. Haltevorrichtung nach Anspruch 1 oder 2, **dadurch gekennzeichnet, daß** die Haltevorrichtung einen motorischen Öffnungsantrieb, insbesondere einen Elektromotor, Elektromagneten oder Pneumatikantrieb, für das Blockierelement (13) aufweist, so daß die Freigabe der Falle (9) motorisch erfolgt.

4. Haltevorrichtung nach einem der vorhergehenden Ansprüche, **dadurch gekennzeichnet, daß** die Sperrklinkenkinematik (12) einen um eine Schwenkachse (14) schwenkbaren Übertragungshebel (15) aufweist, daß durch das Verschwenken der Falle (9) aus der Eingriffstellung heraus in Richtung der Freigabestellung der Übertragungshebel (15) verstellbar ist und daß bei in Haltestellung befindlicher Sperrklinkenanordnung (11) das Blockierelement (13) den Übertragungshebel (15) blockiert, vorzugsweise, daß der Übertragungshebel (15) mit der Falle (9) bewegungsgekoppelt ist, weiter vorzugsweise, daß zur Bewegungskopplung ein Zwischenhebel (18) zwischen dem Übertragungshebel (15) und der Falle (9) angeordnet ist und daß der Zwischenhebel (18) an der Falle (9) einerseits und am Übertragungshebel (15) andererseits schwenkbar und bezüglich der jeweiligen Schwenkachse (10, 14) exzentrisch angelenkt ist, weiter vorzugsweise, daß bei in Eingriffstellung befindlicher Falle (9) die von der Falle (9) über den Zwischenhebel (18) auf den Übertragungshebel (15) wirkende Kraft ein Drehmoment am Übertragungshebel (15) bezüglich dessen Schwenkachse (14) bewirkt und daß die Blockierkraft des Blockierelements (13) diesem Drehmoment entgegenwirkt.

5. Haltevorrichtung nach Anspruch 4, **dadurch gekennzeichnet, daß** der Übertragungshebel (15) vorgespannt ist und daß die Vorspannung des Übertragungshebels (15) der Blockierkraft des Blockierelements (13) entgegenwirkt.

6. Haltevorrichtung nach Anspruch 4 und ggf. nach Anspruch 5, **dadurch gekennzeichnet, daß** der Übertragungshebel (15) eine Rast (23) aufweist und daß das Blockierelement (13) über die Rast (23) in blockierenden Eingriff mit dem Übertragungshebel (15) bringbar ist.

7. Haltevorrichtung nach Anspruch 4 und ggf. nach Anspruch 5 oder 6, **dadurch gekennzeichnet, daß** das Blockierelement (13) nach Art einer Sperrklinke um eine Schwenkachse (24) schwenkbar ist und bei in Haltestellung befindlicher Sperrklinkenanordnung (10) in blockierendem Eingriff mit dem Übertragungshebel (15) steht.

8. Haltevorrichtung nach Anspruch 4 und ggf. nach einem der Ansprüche 5 bis 7, **dadurch gekennzeichnet, daß** die Anlenkung des Zwischenhebels (18) an der Falle (9) einen Freilauf aufweist und daß damit eine Verstellung der Falle (9) aus der Eingriffsstellung heraus in eine von der Freigabestellung aus gesehen jenseits der Eingriffsstellung liegende Überhubstellung ohne eine Verstellung des Übertragungshebels (15) möglich ist.

9. Haltevorrichtung nach Anspruch 8, **dadurch gekennzeichnet, daß** der Zwischenhebel (18) gegen die Falle (9) derart vorgespannt ist, daß die Falle (9) gegen die Vorspannung in die Überhubstellung bringbar ist.

## Claims

1. Retaining device for a vehicle safety device with a component (2) to be displaced abruptly from a resting position into an active position with a retaining element (7), with a latch (9) securing the component (2) in the resting position and additionally acting on the retaining element (7) of the component (2), the latch (9) being pivotable about a pivot axis (10) and as a result, on the one hand, being able to be moved into an engaged position retaining the component (2) and, on the other hand, into a release position releasing the retaining element (7) and thus the component (2), with a locking pawl arrangement (11) retaining the latch (9) in the engaged position, the locking pawl arrangement (11) in turn being able to be moved into a retaining position retaining the latch (9) in the engaged position and into a release position releasing the latch (9), the locking pawl arrangement (11) comprising locking pawl kinematics (12) and an adjustable blocking element (13) and, when the locking pawl arrangement (11) is in the retaining position, the blocking element (13) preventing a displacement of the latch (9) from the engaged position into the release position, **characterized in that** by the displacement of the latch (9) out of the engaged position into the direction of the release position, the locking pawl kinematics (12) is displaced and **in that** the blocking element (13) blocks the displacement of the locking pawl kinematics (12) able to be effected by the latch (9).

2. Retaining device according to Claim 1, **characterized in that** the locking pawl kinematics (12) is a step-down gear and **in that**, as a result, the blocking force to be applied by the blocking element (13) for blocking the latch (9) is reduced according to the design of the step-down gear.

3. Retaining device according to Claim 1 or 2, **characterized in that** the retaining device comprises a motorized opening drive, in particular an electric motor, electromagnet or pneumatic drive for the blocking element (13), so that the release of the latch (9) takes place in a motorized manner.

4. Retaining device according to one of the preceding claims, **characterized in that** the locking pawl kinematics (12) comprises a transmission lever (15) which may be pivoted about a pivot axis (14), **in that** by pivoting the latch (9) out of the engaged position in the direction of the release position the transmission lever (15) may be displaced and **in that**, when the locking pawl arrangement (11) is in the retaining position, the blocking element (13) blocks the transmission lever (15), **in that**, preferably, the transmission lever (15) is motionally coupled with the latch (9), **in that**, further preferably, for the motional coupling an intermediate lever (18) is arranged between the transmission lever (15) and the latch (9) and **in that** the intermediate lever (18) may be pivoted on the latch (9) on the one hand and on the transmission lever (15) on the other hand, and is coupled eccentrically relative to the respective pivot axis (10, 14), **in that**, further preferably, when the latch (9) is in the engaged position, the force acting from the latch (9) via the intermediate lever (18) on the transmission lever (15) produces a torque on the transmission lever (15) relative to the pivot axis (14) thereof and **in that** the blocking force of the blocking element (13) counteracts said torque.

5. Retaining device according to Claim 4, **characterized in that** the transmission lever (15) is pretensioned and that the pretensioning of the transmission lever (15) counteracts the blocking force of the blocking element (13).

6. Retaining device according to Claim 4 and possibly according to Claim 5, **characterized in that** the transmission lever (15) comprises a catch (23) and **in that** the blocking element (13) may be moved via the catch (23) into blocking engagement with the transmission lever (15).

7. Retaining device according to Claim 4 and possibly according to Claim 5 or 6, **characterized in that** the blocking element (13) may be pivoted in the manner of a locking pawl about a pivot axis (24) and, when the locking pawl arrangement (10) is in the retaining position, is in blocking engagement with the transmission lever (15).

8. Retaining device according to Claim 4 and possibly according to one of Claims 5 to 7, **characterized in that** the coupling of the intermediate lever (18) to the latch (9) comprises a freewheel and **in that** a displacement of the latch (9) out of the engaged position into an overtravel position located beyond the engaged position when viewed from the release position is, therefore, possible without a displacement of the transmission lever (15).

9. Retaining device according to Claim 8, **characterized in that** the intermediate lever (18) is pretensioned against the latch (9) such that the latch (9) may be moved counter to the pretensioning into the overtravel position.

## Revendications

1. Dispositif de maintien pour un dispositif de sécurité d'un véhicule, comportant un composant (2) s'allongeant brusquement d'une position de repos à une position d'action avec un élément de retenue (7), avec un loquet (9) maintenant le composant (2) dans la position de repos et s'accrochant à cet effet à l'élément de retenue (7) du composant (2), dans lequel le loquet (9) peut pivoter autour d'un axe de pivotement (10) et peut ainsi être amené d'une part dans une position d'accrochage retenant le composant (2) et d'autre part dans une position de libération libérant l'élément de retenue (7) et de ce fait le composant (2), avec un dispositif de cliquet d'arrêt (11) retenant le loquet (9) dans la position d'accrochage, dans lequel le dispositif de cliquet d'arrêt (11) peut à son tour être amené dans une position de maintien retenant le loquet (9) dans la position d'accrochage et dans une position de détente libérant le loquet (9), dans lequel le dispositif de cliquet d'arrêt (11) comprend une cinématique du cliquet d'arrêt (12) et un élément de blocage réglable (13), et dans lequel, lorsque le dispositif de cliquet d'arrêt (11) se trouve en position de maintien, l'élément de blocage (13) empêche un déplacement du loquet (9) de la position d'accrochage à la position de libération, **caractérisé en ce que** la cinématique du cliquet d'arrêt (12) est déplacée par le déplacement du loquet (9) de la position d'accrochage en direction de la position de libération et **en ce que** l'élément de blocage (13) bloque le déplacement de la cinématique du cliquet d'arrêt (12) actionnable par le loquet (9).

2. Dispositif de maintien selon la revendication 1, **caractérisé en ce que** la cinématique du cliquet d'arrêt (12) est un engrenage réducteur et **en ce que** la force de blocage à appliquer par l'élément de blocage (13) pour le blocage du loquet (9) est réduite de manière correspondante à la conception de l'engrenage réducteur.

3. Dispositif de maintien selon la revendication 1 ou 2, **caractérisé en ce que** le dispositif de maintien comprend un entraînement d'ouverture motorisé, en particulier un moteur électrique, un électroaimant ou un entraînement pneumatique, pour l'élément de blocage (13), de sorte que la libération du loquet (9) est effectuée au moyen d'un moteur.

4. Dispositif de maintien selon l'une quelconque des revendications précédentes, **caractérisé en ce que** la cinématique du cliquet d'arrêt (12) comprend un levier de transmission (15) pivotant autour d'un axe de pivotement (14), **en ce que** le levier de transmission (15) est déplaçable, par le pivotement du loquet (9), de la position d'accrochage en direction de la position de libération et **en ce que**, lorsque le dispositif de cliquet d'arrêt (11) se trouve en position de maintien, l'élément de blocage (13) bloque le levier de transmission (15), de préférence **en ce que** le levier de transmission (15) est couplé en mouvement avec le loquet (9), de préférence encore **en ce qu'**un levier intermédiaire (18) est disposé entre le levier de transmission (15) et le loquet (9) pour le couplage du mouvement et **en ce que** le levier intermédiaire (18) peut pivoter d'une part sur le loquet (9) et d'autre part sur le levier de transmission (15) et est articulé de manière excentrique par rapport à l'axe de pivotement respectif (10, 14), de préférence encore **en ce que**, lorsque le loquet (9) se trouve en position d'accrochage, la force agissant à partir du loquet (9) sur le levier de transmission (15) via le levier intermédiaire (18) provoque un couple de rotation sur le levier de transmission (15) par rapport à son axe de pivotement (14) et **en ce que** la force de blocage de l'élément de blocage (13) s'oppose à ce couple de rotation.

5. Dispositif de maintien selon la revendication 4, **caractérisé en ce que** le levier de transmission (15) est précontraint et **en ce que** la précontrainte du levier de transmission (15) s'oppose à la force de blocage de l'élément de blocage (13).

6. Dispositif de maintien selon la revendication 4 et éventuellement selon la revendication 5, **caractérisé en ce que** le levier de transmission (15) comporte un taquet (23) et **en ce que** l'élément de blocage (13) peut être amené par le taquet (23) en prise de blocage avec le levier de transmission (15).

7. Dispositif de maintien selon la revendication 4 et éventuellement selon la revendication 5 ou 6, **caractérisé en ce que** l'élément de blocage (13) peut pivoter à la manière d'un cliquet d'arrêt autour d'un axe de pivotement (24) et est en prise de blocage avec le levier de transmission (15) lorsque le dispositif de cliquet d'arrêt (10) se trouve en position de maintien.

8. Dispositif de maintien selon la revendication 4 et éventuellement selon l'une quelconque des revendications 5 à 7, **caractérisé en ce que** l'articulation du levier intermédiaire (18) sur le loquet (9) présente une roue libre et **en ce qu'**ainsi un déplacement du loquet (9) de la position d'accrochage à une position de dépassement de course située de part et d'autre de la position d'accrochage, vue de la position de libération, est possible sans déplacement du levier de transmission (15).

9. Dispositif de maintien selon la revendication 8, **caractérisé en ce que** le levier intermédiaire (18) est précontraint contre le loquet (9), de telle manière que le loquet (9) puisse être amené dans la position de dépassement de course contre la précontrainte.
